Europäisches Patentamt

European Patent Office

Office européen des brevets

(19)

(11) Numéro de publication: **0 151 059**
**B1**

(12)

# FASCICULE DE BREVET EUROPÉEN

(45) Date de publication du fascicule du brevet:
21.06.89

(51) Int. Cl.⁴: **G 01 N 21/90,** B 07 C 5/12

(21) Numéro de dépôt: 85400077.5

(22) Date de dépôt: 17.01.85

(54) Emetteur à balayage pour l'inspection optique d'articles transparents.

(30) Priorité: 17.01.84 FR 8400657

(43) Date de publication de la demande:
07.08.85 Bulletin 85/32

(45) Mention de la délivrance du brevet:
21.06.89 Bulletin 89/25

(84) Etats contractants désignés:
AT BE CH DE FR GB IT LI LU NL SE

(56) Documents cité:
EP-A-0 067 484
GB-A-2 001 751
US-A-3 967 301

(73) Titulaire: **SAINT- GOBAIN CINEMATIQUE &
CONTROLE S.G.C.C. Société Anonyme, 56/60,
avenue du Vieux Chemin de Saint- Denis, F-92230
Gennevilliers (FR)**

(72) Inventeur: **Ducloux, Marcel Louis, 12, 14 Boulevard
Carnot, F-78420 Carrières sur Seine (FR)**

(74) Mandataire: **Eudes, Marcel, Saint- Gobain
Recherche 39 Quai Lucien Lefranc, F-93304
Aubervilliers Cedex (FR)**

## Description

Fabrication et mise en oeuvre en série d'articles transparents, voire translucides, en particulier d'objets creux en verre ou matière plastique et plus précisément de récipients tels que des pots, bouteilles ou flacons requièrent à peu près obligatoirement divers contrôles dont la plupart, effectués à très haute cadence, sont des contrôles optiques.

Les plus soignés, dans la mesure où la forme le permet, exigent d'examiner les zones sensibles de ces objets sous l'effet d'une rotation couvrant un tour au moins. Une méthode permettant un contrôle d'ensemble efficace à des cadences élevées consiste en la lecture d'un écran photosensible éclairé en transparence par un faisceau lumineux balayant l'objet, pendant sa rotation, selon des plans diamétraux successifs.

On peut avantageusement employer, pour son intensité et sa grande finesse qui dispensent d'une focalisation sur l'objet, un pinceau laser oscillant, émis latéralement à distance suffisante de l'article pour que, par tranches étroites contiguës, il puisse en balayer toute la hauteur sous des incidences suffisamment proches de la normale.

Une famille de dispositifs courante dans l'industrie emploie un pinceau laser dirigé sur un miroir tournant d'axe horizontal, puis repris par une batterie de miroirs fixes qui, approximativement à angle droit, le dirigent sur l'objet; un article à symétrie axiale sera placé en position fixe devant le faisceau et effectuera un tour complet sur lui-même au fur et à mesure des balayages successifs, ce qui permettra de l'examiner entièrement. Le dispositif selon l'invention appartient à cette famille, dont l'origine se rattache aux publications de brevets FR-A-1 538 259 et FR-A-2 235 365. Il en simplifie les organes mécaniques et en améliore l'adaptabilité.

Lé miroir tournant est constitué d'une roue susceptible de posséder 36 facettes c'est-à-dire de faire couvrir au faisceau, dans un plan vertical, un angle théorique de 20°, ce qui procure un bon compromis entre la fréquence de balayage à atteindre, la faible variation d'angle souhaitable et un allongement excessif du trajet lumineux.

De préférence, le poste de contrôle est équipé d'un organe de mise en rotation tel qu'une paire de galets, auxquels les articles successifs sont conduits par un plateau tournant possédant la forme d'une roue en étoile porteuse d'une succession de montages en V. Pour des raisons d'encombrement et de simplicité de fabrication mais aussi pour qu'il soit facile d'assurer le libre passage des rayons lumineux, il est hautement utile que l'ensemble de l'émetteur puisse alors trouver place au centre de cette roue. La présence de la batterie de miroirs précitée, commodément plans et parallèles à l'axe du miroir tournant, orientés de façon à répartir le balayage en un certain nombre de champs élémentaires illuminant successivement telle et telle zone sensible, aide à y parvenir tout en permettant d'éclairer les articles sous les angles jugés les plus favorables.

Cependant, pour pouvoir vérifier, sur toute leur hauteur, des articles tels que des bouteilles de grande capacité, c'est-à-dire balayer ainsi une plage totale utile $H$ de l'ordre de 35, voire 40 cm, il faut placer la roue à facettes (dont le diamètre est de l'ordre d'une quinzaine de centimètres) à une distance optique de plus d'un mètre de l'article à contrôler, sans que la batterie de miroirs elle-même soit trop éloignée de la source sous peine de prendre des dimensions excessives.

Il deviendra donc pratiquement indispensable de compléter la boîte à lumière par un système optique à réflexions multiples apte à replier le trajet lumineux sans modifier le balayage, c'est-à-dire de préférence dans une succession de plans verticaux.

D'autre part, il est intéressant, lorsqu'on opère à haute cadence et pour réduire les efforts inertiels, d'effectuer le contrôle au vol, c'est-à-dire sans arrêter la translation des bouteilles pour les mettre en rotation. Il sera alors avantageux, pour échapper à la mise en oeuvre d'un appareillage complexe, d'associer à la roue en étoile à mouvement continu, sur laquelle peuvent d'ailleurs s'effectuer certains autres contrôles, une simple courroie extérieure de mise en rotation, placée à poste fixe, et venant au contact de la bouteille à une hauteur intermédiaire, adaptable, entre les points d'appui des montages en V. Un tel organe connu en soi n'a jamais été utilisé dans le cas considéré car il engendre inévitablement un angle mort dans le balayage vertical mais, si l'on remarque qu'une génératrice reste libre, une disposition spéciale des miroirs permettra de supprimer cet angle mort en y faisant converger deux champs lumineux élémentaires.

Parallèlement, il devient nécessaire, pour disposer d'un temps de mesure suffisant, que le balayage accompagne l'objet examiné dans son déplacement: on a pu envisager d'effectuer cette poursuite à partir d'un pinceau initial plat, intercepté par un diaphragme accompagnant la roue en étoile comme le suggère la publication de brevet FR-A-2 235 365; mais à haute cadence, la perte de lumière est gênante et, ne pouvant rendre mobile le lourd ensemble optique, il sera préféré d'opérer à l'aide d'un miroir de poursuite, au besoin une seconde roue à facettes réfléchissantes, d'axe vertical, synchronisée sur le mouvement de l'étoile.

Le dispositif selon l'invention réunit l'ensemble des diverses caractéristiques évoquées ci-dessus.

Il se distingue donc en particulier par la combinaison d'une roue en étoile à mouvement continu avec une courroie de mise en rotation grâce à l'emploi, dans la boîte à lumière, de miroirs répartiteurs inclinés de sorte que les trajets lumineux correspondant à deux au moins des champs élémentaires que l'on désire faire se recouper sur l'objet convergent sensiblement dans le tiers inférieur de la plage utile $\underline{H}$ sous un angle de l'ordre de 15° au moins.

En pratique, la structure de la boîte à lumière procurera au trajet lumineux une longueur minimale supérieure au quadruple de la plage utile $\underline{H}$, les miroirs répartiteurs s'échelonnant obliquement dans le faisceau à partir du quart environ du trajet et sur une distance du même ordre, se trouvant donc à une distance de la roue à facettes allant sensiblement de $\underline{H}$ à $2\underline{H}$.

Afin de réduire encore l'encombrement, la poursuite horizontale sera provoquée non par un miroir tournant, mais par un miroir oscillant à retour rapide commandé en synchronisme avec l'avance de la roue en étoile, sur l'axe de laquelle, de préférence, il se trouvera placé, au centre de la boîte à lumière; une série intermédiaire de miroirs, verticaux, répliera l'ensemble du faisceau sur une distance de l'ordre de $2\underline{H}$, de sorte que l'éloignement de l'article au miroir de poursuite se trouvera réduit approximativement à $\underline{H}$. Dans ces conditions, l'encombrement horizontal de la boîte à lumière est de l'ordre de $\underline{H}/2$, sa hauteur dépasse peu $\underline{H}$ et le diamètre de la roue en étoile n'excédera pas $2\underline{H}$.

Une machine de moins d'un mètre de diamètre permet ainsi, avec une longueur minimale de faisceau de 1 400 mm, de contrôler au prix de réglages simples toutes sortes de bouteilles de boissons d'une capacité de 25 à 125 cl.

L'angle total de balayage consacré à créer les divers champs latéraux élémentaires peut être réduit à 16° et son champ principal à 12° environ; l'excédent sert alors, sur 2° environ, à engendrer un éclairage "axial" apte à illuminer le fond des objets par l'ouverture, selon des rayons successifs, grâce à un simple renvoi par un miroir complémentaire, normalement associé à un condenseur pour ramener cet éclairage le long d'une caustique située au niveau de l'ouverture des articles observés.

Avantageusement, le miroir de renvoi sera un miroir fixe, incurvé, de révolution autour d'un axe sensiblement proche de celui du miroir de poursuite c'est-à-dire en pratique de la roue en étoile elle-même; il sera associé à un condenseur réglable, à lentilles cylindriques de génératrices horizontales.

Une infime partie du balayage est également utilisée pour exciter périodiquement une cellule photoélectrique qui fournit ainsi des impulsions d'horloge aptes à synchroniser la mesure sur les balayages verticaux successifs, ce qui permet de localiser avec précision dans le cycle le niveau où se situent les défauts détectés et par conséquent leur nature.

Un exemple avantageux sera décrit ci-dessous en référence aux dessins, qui montrent:

- figure 1, une vue schématique en plan, de l'appareil,
- figure 2, une élévation avec coupes successives de l'ensemble mécanique,
- figure 3, l'épure de principe du trajet optique du pinceau lumineux,
- figure 4, une coupe en plan de la boîte à lumière, selon la ligne IV - IV de la figure 2,
- figure 5, une vue de dessus de la transmission, avec arraché, selon la ligne V - V de la figure 2,
- figure 6, un détail de la commande du miroir, en coupe selon VI - VI de la figure 2.

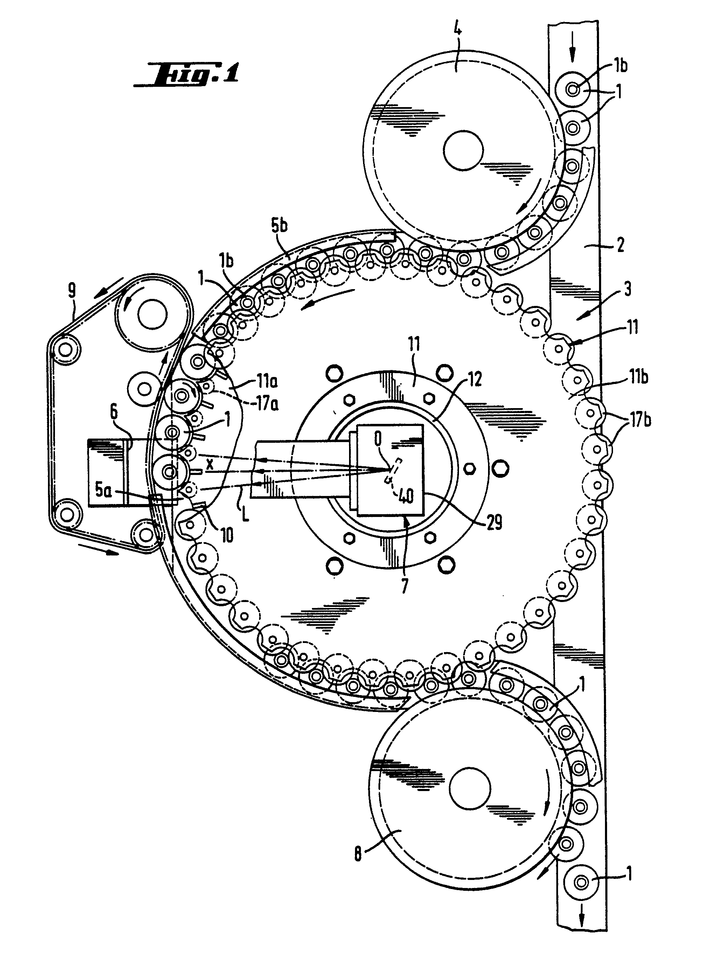

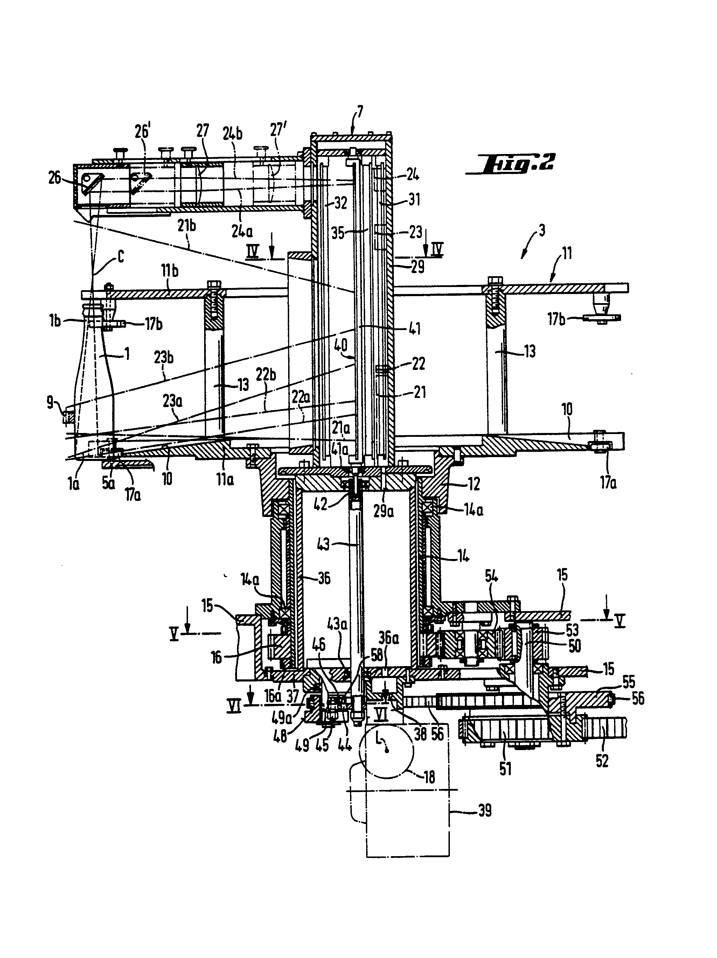

La structure globale de la machine est montrée par les figures 1 et 2:

Les bouteilles 1, amenées par le convoyeur 2, sont introduites sur une roue en étoile 3 par une roue distributrice 4. Chaque bouteille, quittant le convoyeur 2, se déplace ainsi sur une platine 5a en face d'un plan diamétral fixe Ox de la roue en étoile, contre laquelle un guide extérieur 5b la maintient, suivant un trajet circulaire le long duquel elle peut être soumise à plusieurs contrôles à divers postes successifs; en particulier, supportée sur moins de la moitié du fond seulement par la platine 5a, elle subit devant l'écran photosensible 6, sous l'effet du faisceau lumineux L fourni par un organe émetteur 7, le contrôle optique, objet de l'invention. Une roue éjectrice 8 opère un tri, à la sortie de l'étoile, en fonction des données recueillies.

Ces contrôles s'opèrent sans arrêt des bouteilles, en particulier au poste de contrôle optique, où la mise en rotation de ces dernières s'effectue à l'aide d'une courroie 9, simple ou multiple, tournant en sens inverse de la roue 3.

Bien que l'opération s'effectue au vol, la position de la bouteille est fixe par rapport à la roue en étoile et, l'examen optique se faisant uniquement dans le plan vertical Ox passant par son axe, il suffit, pour permettre au faisceau d'atteindre la bouteille depuis l'axe de la machine, de ménager sur la roue, en regard de chaque poste, un dégagement vertical 10.

Le nombre d'alvéoles, qui peut aller jusqu'à 36 et plus, donc la forme et le diamètre de la roue en étoile, de même, bien entendu, que les positions relatives de l'écran et de la courroie 9 dépendent de la dimension des bouteilles à contrôler.

A raison d'un tour en 3 secondes, une roue à 36 positions permet ainsi de présenter au contrôle plus de 40 000 articles à l'heure.

La roue en étoile revêt de préférence la forme d'un barillet 11 constitué d'un plateau inférieur 11a porté par le moyeu 12 et d'une couronne 11b rendue solidaire de ce plateau par des colonnes 13.

Dans l'exemple donné, le fût 14 du moyeu 12, porté par un double palier 14a reposant sur le bâti 15 de la machine, s'y trouve immobilisé avec sa couronne d'entraînement dentée 16 par une bague vissée 16a.

En face de l'émetteur 7, chaque bouteille 1, reposant sur la platine 5a par une partie seulement de son fond 1a, est appliquée par la courroie 9 contre un montage en V, de préférence constitué, pour faciliter la rotation, d'un double train de galets 17a, 17b communs à deux montages successifs.

A la partie inférieure de l'émetteur 7, le pinceau lumineux étroit L̲, engendré par un laser représenté très schématiquement en 18, se réfléchit successivement sur chacune des facettes 19a̲ d'une roue 19 dont l'axe est horizontal et normal à la direction du pinceau L̲ ce qui provoque un balayage vertical.

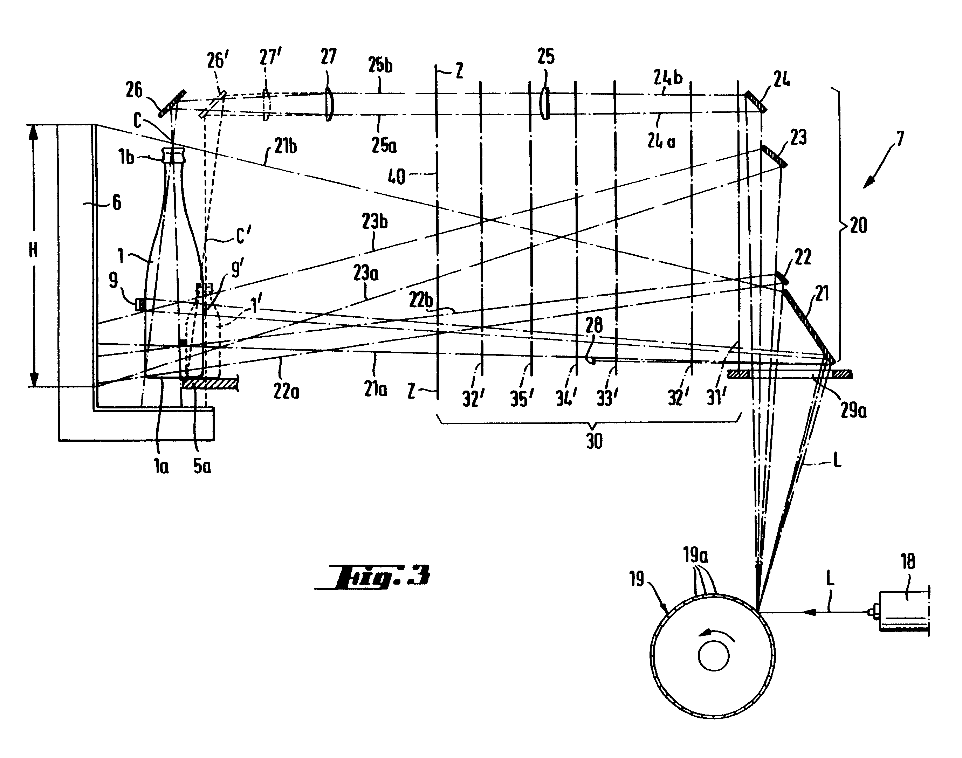

La figure 3 montre le développement de ce balayage lumineux dans un plan vertical.

La roue 19 comporte 36 facettes, ce qui permet, en pratique, d'obtenir un angle de balayage utilisable de l'ordre de 18°, un peu inférieur à l'angle théorique; elle tourne à 6 000 tours/min.

Le pinceau lumineux est ainsi renvoyé vers le haut, 3 600 fois par seconde, sur une batterie 20 de quatre miroirs plans, perpendiculaires au plan de figure, échelonnés l'un derrière l'autre à une distance de la roue allant de 40 à 80 cm, de façon à intercepter tour à tour la lumière sur l'ensemble du balayage, qui se trouve ainsi réparti en trois champs principaux et un champ secondaire.

Le miroir 21 intercepte un angle de l'ordre de 12° et, incliné de 35° environ sur la verticale, dirige le faisceau correspondant sous une inclinaison de l'ordre de + 7°: traversant deux fois leur paroi, celui-ci couvre ainsi, sur une plage 21a̲, 21b̲, la quasi-totalité de la surface des bouteilles 1, malgré la hauteur importante de ces dernières à l'exception de leur partie inférieure et, bien entendu, d'une zone 9' occultée par la courroie 9.

Le miroir 22 intercepte une partie beaucoup plus faible du champ, correspondant à 1° d'arc seulement et, incliné de 45° environ, dirige les rayons lumineux correspondants vers le bas des articles sous des inclinaisons de l'ordre de - 7°: ceci, sur la plage 22a̲, 22b̲, permet d'atteindre la partie inférieure du fût jusqu'au jable. Le balayage couvre ainsi, mais avec un angle mort, la totalité de la plage utile H̲.

Le miroir 23 est placé plus haut au dessus de la roue en étoile 3 et, incliné d'environ 50°, dirige les rayons lumineux dans un champ de l'ordre de 3°, sous une inclinaison moyenne de - 16°, vers la partie haute du tiers inférieur de la plage H̲: ceci permet d'inspecter la partie médiane des bouteilles, sur la plage 23a̲, 23b̲, sous une inclinaison suffisante pour que la zone 9' qui échappait au faisceau du miroir 21 puisse être vue en transparence par celui qui provient du miroir 23.

Un dernier miroir 24, incliné à 45°, engendre un champ secondaire 24a̲, 24b̲ repris par une étroite lentille cylindrique 25 de façon à créer un faisceau de balayage parallèle sur la plage 25a̲, 25b̲. Ce faisceau est reçu, à l'aplomb du goulot 1b̲ des récipients, par un miroir complémentaire 26, qui le renvoie vers le bas, après qu'il a traversé une lentille 27 destinée à le concentrer en C au niveau du goulot, sous un angle d'ouverture de l'ordre de 7°; ceci permet d'éclairer le fond 1a̲, en dehors de la platine 5a̲, sur tout un rayon.

Au cours d'une rotation complète de la bouteille devant l'écran 6 sous l'éclairage du pinceau lumineux mobile, chaque portion de sa paroi se trouve ainsi examinée tour à tour au moins une fois; au début de chaque balayage vertical, une diode photoélectrique de synchronisation 28 intercepte une fraction étroite du faisceau renvoyé par le miroir 21.

Il est d'autre part possible d'inspecter sur une même machine des bouteilles de dimensions très différentes telles que la bouteille 1 et la bouteille 1'. Il suffit, pour ce faire, de déplacer le miroir 26 en 26', pour le ramener au-dessus du col du récipient, la lentille 27 en 27', pour abaisser en C' la zone de convergence des rayons lumineux et, bien entendu, d'adapter aussi la position de la courroie 9.

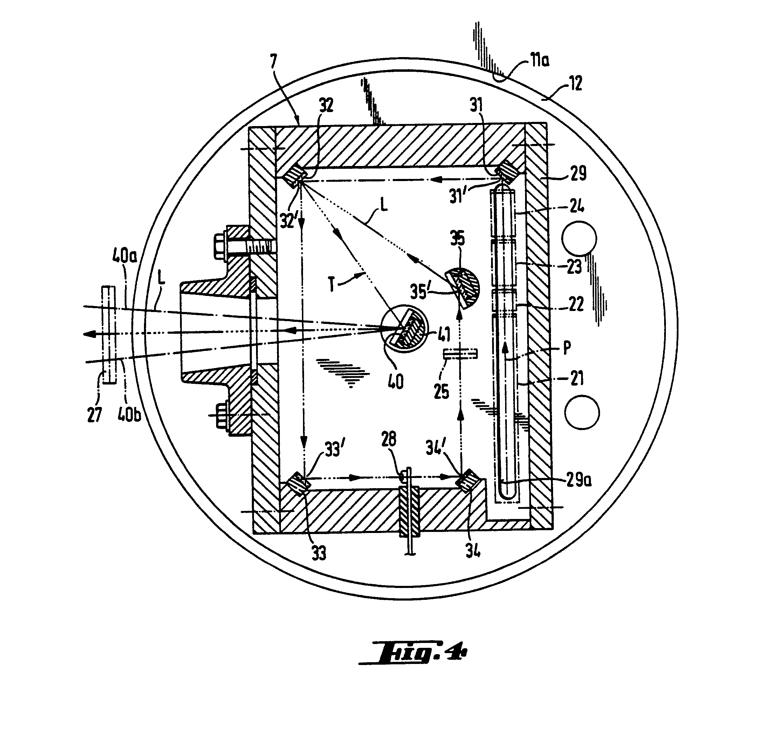

Indépendamment des quatre étroits miroirs de la batterie 20, montés sur l'un de ses cotés au-dessus de la roue 19 et qui sont également visibles en trait mixte sur la figure 4 au dessus de la fente 29a̲ de la boîte à lumière 29 de l'émetteur 7, celle-ci renferme une série 30 de cinq miroirs 31 à 35 destinés à replier le plan vertical P de la figure 3 dans lequel se déplace le pinceau lumineux en un trajet T, selon les axes verticaux successifs 31' à 35' également visibles sur cette figure 3.

Il s'agit également de miroirs étroits, mais verticaux: de façon commode, les premiers seront disposés à 45°, les miroirs 31 à 33 aux angles de la boîte, le miroir 34 étant au contraire décalé de façon à faire éviter au faisceau la batterie de miroirs 20; enfin le miroir 35 est disposé de façon à renvoyer la lumière sur le miroir 32 qui l'oblige alors à se réfléchir en direction d'un miroir 40, placé au centre de la boîte le long d'un axe z également visible sur la figure 3, en coïncidence avec celui de la roue en étoile.

La boîte à lumière 29 est supportée par un boîtier 36 qui pénètre à l'intérieur du moyeu de la roue en étoile pour reposer à son tour par son socle 37 sur un voile du bâti 15 de la machine, supportant aussi, sous sa fente 36a̲, la colonne 38 de fixation du boîtier 39 de la roue 19.

Le miroir 40 est capable d'osciller autour de l'axe z; il permet ainsi au faisceau de balayer progressivement un champ horizontal 40a̲, 40b̲ correspondant au défilement de la bouteille pendant une opération de contrôle. En pratique et compte-tenu de l'avance de la roue pendant le retour du miroir, ce champ reste un peu inférieur à l'espacement angulaire entre montages, lequel n'excède pas les 15° théoriquement disponibles sur une roue à 24 positions, la largeur de l'écran 6 correspondant bien entendu à la course en question. La rotation du miroir, elle-même, sera deux fois moindre.

La lentille 25 est placée entre les miroirs 34 et 35, sur le trajet de la seule partie du faisceau issue du miroir 24. Pour sa part, la lentille cylindrique 27 est placée en aval du miroir 40 mais, horizontalement, se comporte comme une lame à faces parallèles: ainsi que le montre la figure, les décalages verticaux qu'elle impose aux trajets lumineux sont donc négligeables et il est inutile de recourir à une autre solution, telle que l'emploi d'une lentille torique.

En raison de sa position plus éloignée de l'axe Z, le miroir 26 n'est pas représenté sur la figure. S'il s'agissait d'un miroir plan fixe, on se rend compte que la variation de sa distance à l'axe serait relativement importante entre les positions extrêmes du faisceau et sa position médiane et que, de plus, il déporterait assez obliquement les rayons lumineux.

Il est possible de lui substituer, pour pallier cet inconvénient, une série de petits miroirs fixes montés sur la roue en étoile de façon à accompagner chaque bouteille. Il est cependant plus simple d'utiliser un miroir unique, fixe, mais incurvé de façon à suivre de plus près la trajectoire des axes des bouteilles. Il n'est toutefois pas nécessaire d'employer un miroir de révolution dont l'axe coincïde strictement avec l'axe Z et l'on peut se contenter de prévoir une courbure conique ou cylindrique, voire sphérique, correspondant à la distance moyenne d'utilisation, mesurée à mi-chemin des positions extrêmes 26 et 26' de la figure 3.

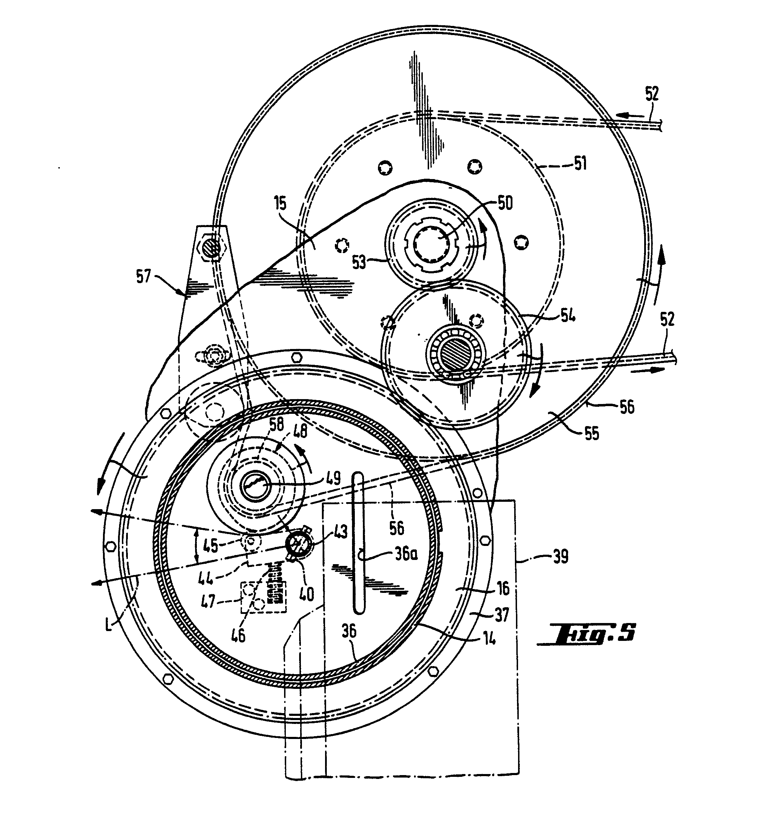

Divers systèmes à échappement sont susceptibles d'engendrer le déplacement du miroir 40 et son retour à la position de départ en liaison avec les passages des montages successifs. Cependant la solution la plus avantageuse quant à la régularité du mouvement mais aussi quant à la souplesse d'emploi consiste en la commande par une came effectuant un tour par cycle de contrôle. Un tel système est décrit ci-dessous: l'ensemble du mécanisme de commande de la poursuite horizontale avec retour rapide est visible sur la figure 2 et sa transmission apparaît plus clairement sur la figure 5.

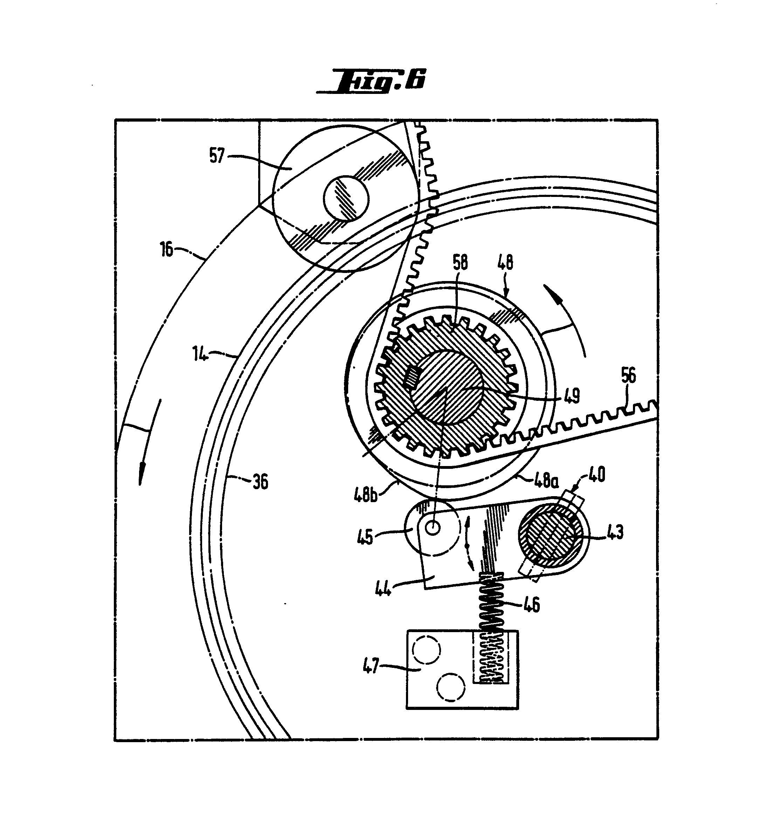

Le miroir 40 est porté par un arbre 41 monté entre deux paliers 41a à l'intérieur du boîtier 29. L'arbre 41 se trouve lui-même en prise par l'intermédiaire d'un accouplement souple 42 avec un arbre de transmission 43 monté entre deux paliers 43a dans le boîtier 36. L'arbre 43 porte enfin (voir aussi figure 6) un bras 44 muni d'un galet 45, qui se trouve rappelé par le ressort 46 d'une butée 47 contre une came 48 montée à l'extrémité d'un arbre de commande 49 tournant dans le double palier 49a.

La came 48 possède, sur la majeure partie de sa périphérie, une rampe régulièrement ascendante 48a apte à repousser uniformément le galet 46, pour faire tourner le miroir 40 dans le même sens que la roue en étoile 3 (mais à vitesse moitié); sur les 35 à 45° de l'arc opposé 48b, la came permet un retour rapide puis freiné du miroir à sa position initiale. Elle fera donc un tour par cycle, en phase avec la roue en étoile, chaque fois que celle-ci progressera d'un angle égal au pas des montages, sa course de commande correspondant pour sa part à l'angle d'observation disponible.

A cette fin la came 48 et la roue en étoile 3 sont mues à partir d'un même arbre distributeur 50. Cet arbre porte une poulie réceptrice 51 reliée au moteur de la machine (non représenté) par une transmission 52, qui entraîne également divers dispositifs annexes tels que la courroie 9. Il attaque la couronne dentée 16 de la roue en étoile par un train d'engrenages 53 et 54 dans un rapport de transmission de 4 : 1. Enfin il porte une poulie dentée motrice 55 reliée par une courroie crantée 56 équipée d'un tendeur 57 à une poulie dentée réceptrice 58 montée sur l'arbre de commande 49.

La came 48 et la poulie 58 forment un ensemble monobloc interchangeable, claveté sur l'arbre 49; il peut en exister trois modèles, adaptés chacun à un type différent de roue en étoile. Les diamètres de gorge des roues de ces trois blocs changent à proportion des angles de 10, 12 et 15° séparant les montages de sorte que, le rapport de transmission évoluant en sens inverse, de 9 à 7,5 puis 6, le taux de démultiplication obtenu entre la came et la roue en étoile prend finalement les valeurs respectives 36, 30 et 24. Les cames correspondantes ont un même diamètre moyen mais leur variation de rayon se trouve elle-même sensiblement proportionnelle aux angles de poursuite disponibles compte-tenu du temps mort de retour du miroir. En fin de compte, et dans tous les cas, elle impose une fois par cycle au galet 45, donc à l'arbre 43 puis au miroir oscillant 40 un mouvement de poursuite avec retour rapide d'amplitude un peu inférieure à la moitié de l'angle d'espacement des montages.

## Revendications

1. Dispositif de contrôle optique de l'ensemble de la surface d'objets creux transparents, voire translucides, comprenant une roue en étoile transporteuse à mouvement continu associée à un organe extérieur de mise en rotation des objets, un émetteur engendrant un pinceau lumineux laser, dirigé sur un miroir tournant avant d'être repris dans une boîte à lumière à réflexions multiples par une batterie de miroirs répartiteurs pour former un faisceau lumineux oscillant qui, grâce à un organe de poursuite, accompagne dans son déplacement l'objet mis en rotation devant lui sur un tour complet, le balayant selon des plans diamétraux successifs, enfin un récepteur à écran photosensible éclairé en transparence par le pinceau lumineaux, caractérisé en ce que la roue en étoile (3), est associée pour la mise en rotation des objets à une courroie (9) venant à poste fixe, au contact de la paroi latérale de l'objet, à hauteur intermédiaire, et que la boîte à lumière (29) fait converger les rayons lumineux sous des inclinaisons moyennes assez différentes pour leur permettre, après reprise par l'organe de poursuite (40), d'inspecter en transparence, en évitant la courroie, toute zone (9'...) de la paroi qui fait face à l'émetteur.

2. Dispositif de contrôle optique selon la revendication 1, caractérisé en ce que l'organe de poursuite est un miroir oscillant à retour rapide synchronisé avec l'avance de la roue en étoile et dont l'axe est de préférence confondu avec le sien.

3. Dispositif de contrôle optique selon l'une des revendications 1 et 2, caractérisé en ce qu'à l'intérieur d'un angle total de balayage latéral réduit à 16° environ, les trajets lumineux correspondant à deux au moins des champs élémentaires créés par la batterie de miroirs répartiteurs (20) convergent sensiblement dans le tiers inférieur de la plage utile (H), pour se recouper sur l'objet sous un angle de l'ordre de 15° au moins, l'excédent servant, sur 2° environ, à illuminer le fond après renvoi par un miroir complémentaire (26) ramenant l'éclairage le long d'une caustique (C) située au niveau de l'ouverture des objets.

4. Dispositif de contrôle optique selon les revendications 2 et 3, caractérisé en ce que le miroir de renvoi complémentaire est un miroir fixe, de forme incurvée et de préférence centrée sur un axe proche de ceux du miroir de poursuite oscillant et de la roue en étoile (3).

5. Dispositif de contrôle optique selon la revendication 4, caractérisé en ce que le miroir de renvoi est associé à un condenseur réglable, à lentilles cylindriques (25, 27).

6. Dispositif de contrôle selon l'une des revendications 2 à 5, caractérisé en ce que la structure de la boîte à lumière procure au trajet lumineux une longueur minimale supérieure au quadruple de la plage utile H, la batterie (20) de miroirs répartiteurs s'échelonnant obliquement dans le faisceau à une distance du miroir tournant (19) qui va sensiblement de H à 2H, et dirigeant à son tour les rayons lumineux sur une série de miroirs (30) qui replient le faisceau sur une distance de l'ordre de 2H, en amont du miroir de poursuite, dont l'éloignement à l'article se trouve ainsi voisin de H.

7. Dispositif de contrôle optique selon la revendication 6, caractérisé en ce que le miroir tournant (19), d'axe horizontal, renvoie le pinceau lumineux vers le haut, sur une batterie (20) comprenant quatre miroirs répartiteurs plans, parallèles à l'axe de celui-ci et placés en amont d'une série (30) de miroirs plans verticaux précédant le miroir de poursuite.

8. Dispositif de contrôle optique selon la revendication 2, caractérisé en ce que l'arbre du miroir de poursuite est commandé par une came (48).

9. Dispositif de contrôle optique selon la revendication 8, caractérisé en ce que la came, qui effectue un tour par cycle de contrôle, possède, sur la majeure partie de sa périphérie, une rampe régulièrement ascendante (48a) apte à faire tourner le miroir de poursuite (40) dans le même sens que la roue en étoile (3) mais à vitesse moitié et, sur l'arc opposé (48b), une rampe descendante permettant un retour rapide puis freiné du miroir à sa position initiale.

10. Dispositif de contrôle optique selon la revendication 9, caractérisé en ce que la roue en étoile et la came sont entraînées à partir d'un même arbre distributeur (50), cette dernière par l'intermédiaire d'une courroie crantée (56), la poulie dentée réceptrice (58) montée sur son arbre de commande (49) formant avec elle un ensemble monobloc interchangeable, les diamètres de gorge des roues des divers blocs changeant à proportion des angles séparant les montages sur la roue en étoile, la variation de rayon des cames correspondantes autour d'un même diamètre moyen se trouvant sensiblement proportionnelle aux angles de poursuite disponibles compte-tenu du temps mort de retour du miroir.

11. Dispositif de contrôle selon l'une des revendications 1 à 10, caractérisé en ce que chaque objet est appliqué par la courroie de mise en rotation (9) contre un montage en V constitué d'un double train de galets (17, 17a) communs à deux montages successifs.

**Patentansprüche**

1. Vorrichtung zur optischen Kontrolle der Gesamtheit der Oberfläche von durchscheinenden, gegebenenfalls durchsichtigen hohlen Gegenständen, mit einem kontinuierlich bewegten Transport-Sternrad, dem ein äußeres Organ zum Drehen der Gegenstände zugeordnet ist, einem Sender zum Erzeugen eines Laserlichtstrahls, der auf einen Drehspiegel gerichtet wird, bevor er nach Durchsetzen eines Leuchtkastens mit Vielfachreflexion von einer Gruppe von Verteilerspiegeln erfaßt wird, die je einen schwingenden Lichtstrahl liefern, welcher mittels eines Nachlauforganes, das durch seine Bewegung den vor ihm in Drehung befindlichen Gegenstand während einer vollständigen Umdrehung begleitet und den Gegenstand in aufeinanderfolgenden Diametralebenen bestreicht, und einem Empfänger mit einem lichtempfindlichen Schirm, der vom durchscheinenden Licht beleuchtet wird, dadurch gekennzeichnet, daß dem Sternrad (3) zur Drehung der Gegenstände in einer ortsfesten Station ein Treibriemen (9) zugeordnet ist, der an der Seitenwand des Gegenstandes in einer Zwischenhöhe anliegt, und daß der Leuchtkasten (29) unter stark verschiedenen mittleren Neigungswinkeln konvergieren de Lichtstrahlen lefert, damit diese nach ihrer Erfassung durch das Nachlauforgan (40) unter Umgehung des Treibriemens jede Zone (9'...) von der dem Sender zugekehrten Wand aus im durchscheinenden Licht prüfen können.

2. Vorrichtung nach Anspruch 1, dadurch gekennzeichnet, daß das Nachlauforgan ein Spiegel ist, der mit rascher Rückstellung synchron mit der Vorschubbewegung des Sternrades schwingt und dessen Achse vorzugsweise mit der Achse des Sternrades zusammenfällt.

3. Vorrichtung nach Anspruch 1 oder 2, dadurch gekennzeichnet, daß innerhalb eines seitlichen Gesamtablenkwinkels, der auf etwa 16° begrenzt ist, die Lichtwege zumindest zwei Elementarfeldern entsprechen, welche durch die Gruppe (20) von Verteilerspiegeln erzeugt werden und im wesentlichen zum unteren Drittel des Nutzbereiches (H) des Gegenstandes konvergieren, um sich im Gegenstand unter einem Winkel in der Größenordnung von zumindest 15° zu schneiden, wobei der Rest von etwa 2° nach Erfassung durch einen zusätzlichen Umlenkspiegel (26) und Fokussierung des Lichtes entlang einer Brennlinie (C) in Höhe der Öffung des Gegenstandes dazu dient, den Boden des Gegenstandes zu beleuchten.

4. Vorrichtung nach den Ansprüchen 2 und 3, dadurch gekennzeichnet, daß der zusätzliche Umlenkspiegel ein feststehender gekrümmter Spiegel ist, der vorzugsweise auf eine Achse zentriert ist, die nahe der Achse des schwingenden Nachlaufspiegel und des Sternrades (3) liegt.

5. Vorrichtung nach Anspruch 4, dadurch gekennzeichnet, daß dem zusätzlichen Umlenkspiegel ein verstellbarer Kondensor mit Zylinderlinsen (25, 27) zugeordnet ist.

6. Vorrichtung nach einem der Ansprüche 2 bis 5, dadurch gekennzeichnet, das der Aufbau des Leuchtkastens dem gesamten Lichtweg eine Mindestlänge verleiht, die größer als das Vierfache des Nutzbereiches H ist, wobei die Verteilerspiegel der Gruppe (20) schräg und gestaffelt im Lichtweg in einer Entfernung vom Drehspiegel (19) angeordnet sind, die im wesentlichen zwischen H und 2H liegt, und ihrerseits die Lichtstrahlen auf eine Reihe (30) von Spiegeln werfen, welche die Strahlen zu einer Weglänge von 2H vor dem Nachlaufspiegel falten, dessen Entfernung vom Gegenstand auf diese Weise etwa H beträgt.

7. Vorrichtung nach Anspruch 6, dadurch gekennzeichnet, daß der Drehspiegel (19) mit horizontaler Achse den Lichtstral nach oben auf eine Gruppe (20) von vier ebenen Verteilerspiegeln richtet, welche parallel zur Achse des Drehspiegels und vor der Reihe (30) von vertikalen ebenen Spiegeln angeordnet sind, welche dem Nachlaufspiegel vorausgehen.

8. Vorrichtung nach Anspruch 2, dadurch gekennzeichnet, das die Welle des Nachlaufspiegels durch einen Nocken (48) gesteuert wird.

9. Vorrichtung nach Anspruch 8, dadurch gekennzeichnet, das der Nocken, der je Kontrollzyklus eine Umdrehung ausführt, auf dem größten Teil seines Umfanges eine gleichmäßig ansteigende Rampe (48a) aufweist, durch welche der Nachlaufspiegel (40) gleichsinnig wie das Sternrad (3), aber mit halber Geschwindigkeit gedreht wird, auf einem gegenüberliegenden Umfangsteil (48b) hingegen eine abfallende Rampe aufweist, die eine rasche und sodann gebremste Rückstellung des Spiegels in seine Ausgangsstellung bewirkt.

10. Vorrichtung nach Anspruch 9, dadurch gekennzeichnet, daß das Sternrad und der Nocken ausgehend von ein und derselbesn Verteilerwelle (50) angetrieben werden, letzterer vermittels eines Zahnriemens (56), wobei die zugehörige, auf der Nockenwelle (49) angeordnete Zahnscheibe (58) mit dem Nocken einen austauschbaren einstückigen Block bildet und die Durchmesser der Aufnahmerasten der Sternräder der verschiedenen Blöcke sich mit den Zentriwinkeln ändern, welche die Aufnahumerasten am Stenrad einschließen, und wobei die Änderung des Radius der zugehörigen Nocken um ein und denselben mittleren Durchmesser unter Berücksichtigung der Totzeit der Spiegelrückstellung im wesentlichen proportional zu den erforderlichen Nachlaufwinkeln ist.

11. Vorrichtung nach einem der Ansprüche 1 bis 10, dadurch gekennzeichnet, daß jeder Gegenstand mittels des zur Erzeugung einer Drehbewegung dienenden Treibriemens (9) an eine V-förmige Aufnahmerrast angelegt wird, die aus einem Doppelsatz von Rollenpaaren (17, 17a) gebildet ist, welche jeweils zwei aufeinanderfolgenden Aufnahmerasten gemeinsam sind.

**Claims**

1. Apparatus for optical inspection of the entirety of the surface of transparent or indeed translucent hollow objects, comprising a conveying star wheel in continuous movement associated with an external device for driving the objects in rotation, an emitter generating a pencil of laser light directed onto a revolving mirror before being picked up in a light box having multiple reflections by means of a battery of distributor mirrors for forming an oscillating light beam which, as a result of a tracking device, follows in its movement the object rotationally driven in front of it through one complete revolution, sweeping the object in successive diametral planes, and finally a receiver having a photosensitive screen transparently illuminated by the pencil of light, characterized in that the star wheel (3) is associated, for the rotational driving of the objects, with a belt (9) arriving at a fixed position, in contact with the lateral wall of the object, at an intermediate height, and that the light box (29) causes the light beams to converge at average inclinations that differ sufficiently to allow them, after being picked up by the tracking device (40), to inspect, in transparency and avoiding the belt, every zone (9'...)of the wall which is opposite the emitter.

2. Optical inspection apparatus according to Claim 1, characterized in that the tracking device is a mirror oscillating with rapid return motion synchronized with the advance of the star wheel and the axis of which preferably coincides with that of the wheel.

3. Optical inspection apparatus according to one of Claims 1 and 2, characterized in that,

7

within a total angle of lateral sweep reduced to approximatley 16°, the light paths corresponding to at least two of the elementary fields created by the battery of distributor mirrors (20) converge substantially in the lower third of the useful range (H), to overlap on the object in angle of the order of at least 15°, the excess serving, over approximatley 2°, for illuminating the bottom after return by a complementary mirror (26) which focuses the illumination along a caustic (C) situated at the level of the aperture of the objects.

4. Optical inspection apparatus according to Claims 2 and 3, characterized in that the complementary return mirror is a fixed mirror, of curved form and preferably centered on an axis near to those of the oscillating tracking mirror and of the star wheel (3).

5. Optical inspection apparatus according to Claim 4, characterized in that the return mirror is associated with an adjustable focusing device having cylindrical lenses (25, 27).

6. Optical inspection apparatus according to one of Claims 2 to 5, characterized in that the construction of the light box provides the light path with a minimum length greater than four times the useful range H, the battery (20) of distributor mirrors being staggered obliquely within the beam at a distance from the revolving mirror (19) which ranges substantially from H to 2H, and in its turn directing the light rays onto a series of mirrors (30) which reflect the beam through a distance of the order of 2H, upstream of the tracking mirror, the distance of which from the object is thus approximately H.

7. Optical inspection apparatus according to Claim 6, characterized in that the revolving mirror (19), having a horizontal axis, reflects the light pencil upwards onto a battery (20) comprising four plane distributor mirrors, parallel to the axis of the revolving mirror snd situated upstream of a series (30) of vertical plane mirrors preceding the tracking mirror.

8. Optical inspection apparatus according to Claim 2, characterized in that the shaft of the tracking mirror is driven by a cam (48).

9. Optical inspection apparatus according to Claim 8, characterized in that the cam, which makes one revolution per inspection cycle, possesses over the greater part of its periphery a uniformly ascending ramp (48a) adapted for causing the tracking mirror (40) to rotate in the same direction as the star wheel (3) but at half the speed and, on the opposite arc (48b), a descending ramp permitting a rapid return, then braked return, of the mirror into its initial position.

10. Optical inspection apparatus according to Claim 9, characterized in that the star wheel and the cam are driven from a single distributor shaft (50), the cam by means of a serrated belt (56), the driven toothed wheel (58) mounted on its drive shaft (49) forming with it an interchangeable monoblock unit, the groove diameters of the wheels of the various monoblock units changing in proportion to the angles separating the mountings on the star wheel, the variation in radius of the corresponding cams about a mean diameter being substsntially proportional to the tracking angles available taking into account the dead time for return of the mirror.

11. Optical inspection apparatus according to one of Claims 1 to 10, characterized in that each object is pressed by the rotational drive belt (9) onto a V-shaped mounting composed of a double train of rollers (17, 17a) common to two successive mountings.

**Fig.1**

Fig.2

*Fig. 3*

EP 0 151 059 B1

_Fig. 4_

Fig. 5

Fig.6